# EUROPEAN PATENT SPECIFICATION

(11) **EP 0 648 622 B1**
(45) Date of publication and mention of the grant of the patent: **29.01.1997**
(21) Application number: 94307688.5
(22) Date of filing: 19.10.1994
(51) Int. Cl.: B60C 11/04, B60C 11/13

(54) **Pneumatic tyre**
Luftreifen
Bandage pneumatique

(30) Priority: 19.10.1993 JP 285979/93
(43) Date of publication of application: 19.04.1995
(73) Proprietor: Sumitomo Rubber Industries Ltd., Kobe-shi, Hyogo-ken (JP)
(72) Inventor: Iwamura, Wako, Kobe-shi, Hyogo-ken (JP)
(74) Representative: Stewart, Charles Geoffrey

(56) References cited:
- EP-A- 0 520 755
- EP-A- 0 524 562
- DE-A- 2 029 844
- PATENT ABSTRACTS OF JAPAN vol. 12, no. 292 (M-729) (3139) 10 August 1988 & JP-A-63 068 406 (BRIDGESTONE CORP.) 28 March 1988
- PATENT ABSTRACTS OF JAPAN vol. 14, no. 407 (M-1019) (4350) 4 September 1990 & JP-A-02 155 808 (YOKOHAMA TIRE&RUBBER CO LTD.) 14 June 1990
- PATENT ABSTRACTS OF JAPAN vol. 16, no. 135 (M-1230) 6 April 1992 & JP-A-03 295 706 (TOYO TIRE&RUBBER CO. LTD.) 26 December 1991

## Description

The present invention relates to a pneumatic tyre in which, by specifically limiting the inclination angles of the groove walls of a circumferential groove, running noise is reduced without deteriorating the aquaplaning resistance.

In recent years, along with the development of automobile technology, increasing speeds and vehicle power have made new requirements for tyres which has in general caused the tyre aspect ratio to be lowered.

In such a low aspect ratio tyre, as the ground contacting width is relatively large, running noise is liable to be increased and the aquaplaning phenomenon is liable to occur.

In general, a tyre is provided in the tread portion with a plurality of wide grooves extending continuously in the tyre circumferential direction formed with axially inner and outer groove walls. Conventionally the axially inner groove wall inclines towards the tyre equator and the axially outer groove wall inclines towards the tread edge.

Such a conventional circumferential groove has a good drainage performance in its longitudinal direction, but causes an air resonance noise. This noise is generated by the air in the cavity formed between the circumferential groove and the road surface in the ground contacting patch being vibrated during running. The frequency spectrum of this noise has a maximum peak at a specific frequency, the wave length of which corresponds to twice the cavity length.

JP-A-63-68406 discloses a tyre showing the features of the preamble of claim 1.

In the case of a passenger car tyre, the maximum peak frequency lies around 800 Hz to 1 kHz, which is the most sensitive range for human ears, and thus this air resonance is a major source of the noise from the tyre since the noise from other factors is well reduced nowadays.

If the volume of the circumferential groove is decreased, the resonance can be prevented and the noise can be reduced. However, a decrease in the drainage performance is inevitable, and aquaplaning is then liable to occur.

It is therefore an object of the present invention to provide a pneumatic tyre in which the running noise (coasting noise) especially the above-explained air resonance noise is reduced without deteriorating the aquaplaning resistance.

According to the present invention, a pneumatic tyre comprises a tread portion provided with at least one circumferential groove having an axially inner groove wall and an axially outer groove wall, the radially outer edges of the axially inner and outer groove walls being displaced towards the tyre equator, and the axially outer groove wall intersecting the tread face at an inclination angle (beta) of from 0 to 20 degrees with respect to the normal line of the tread face, characterised in that the axially inner groove wall intersecting the tread face at an inclination angle (alpha) of from 25 to 45 degrees with respect to the normal line to the tread face.

When running on a wet road, the water existing between the road surface and the tread must be discharged through the grooves. If not, the water remains between the road surface and the tread elements such as blocks, ribs and the like, and the aquaplaning phenomenon is liable to occur.

In a conventionally shaped circumferential groove, water in the tread central portion is liable to flow across the circumferential groove, and there is an axially outward flow, since the axially outward groove wall inclines towards the tread edge. In other words, the water remains between the road surface and the tread elements, and aquaplaning is liable to occur.

In contrast with the conventional groove, as the axially inner and outer groove walls according to the invention are inclined towards the tyre equator, the axially outward water flow across the circumferential groove is decreased, and the occurrence of aquaplaning is decreased.

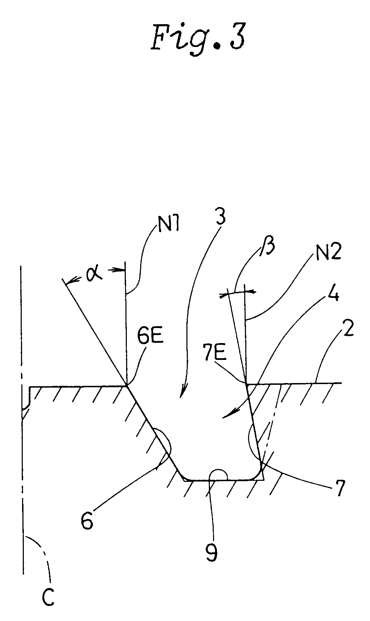

Further, the cross section area is less than with the conventional groove as shown in Fig.3 by an imaginary line. Therefore, the occurrence of air resonance is decreased.

If the above-mentioned angle (beta) is smaller than 0 degree, that is, if the axially outer groove wall 7 inclines towards the tread edge, as explained above, aquaplaning becomes liable to occur. If the angle (beta) is larger than 20 degrees, the rigidity of the tread rubber around the groove edge portion is decreased, and uneven wear and tear-off is liable to occur.

If the above-mentioned angle (alpha) is less than 25 degrees, the water flow into the groove from axially inside of the groove is hindered, and water discharge is decreased. If the angle (alpha) is more than 45 degrees, the water flowing in the groove is liable to flow towards the axially inside thereof. As a result, a water film is formed in the tread centre portion, which lowers the aquaplaning resistance.

An embodiment of the present invention will now be described in detail in conjunction with the accompanying drawings.
Fig.1 is a cross sectional view of an embodiment of the present invention;
Fig.2 shows an example of the tread pattern thereof; and
Fig.3 is an enlarged cross sectional view of a circumferential groove.

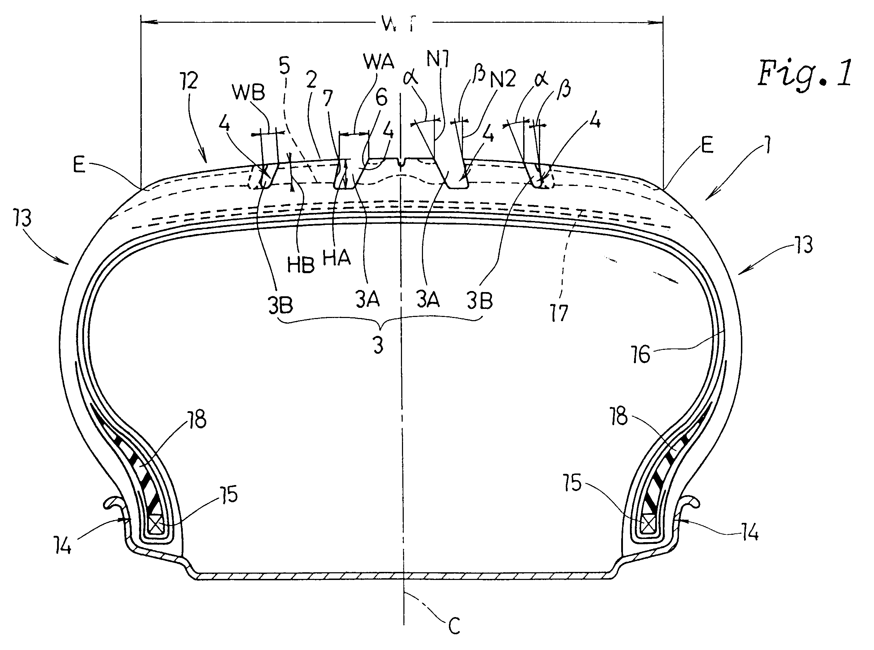

In Figs.1 to 3, a pneumatic tyre 1 comprises a tread portion 12 the tread face 2 of which is convexly curved, a pair of axially spaced bead portions 14, a pair of sidewall portions 13 extending between the tread edges E and the bead portions 14, a pair of bead cores 15 disposed one in each of the bead portions 14, a carcass 16 extending between the bead portions 14 and turned up around the bead cores 15 from the axially inside to the outside thereof, a belt 17 disposed radially outside the carcass 16 and inside a rubber tread, and a bead apex 18 made of hard rubber disposed between the carcass main portion and each turned up portion and tapering radially outwardly from the bead core 15.

In this embodiment, the tyre 1 is a passenger radial tyre, and the aspect ratio defined as the ratio of the tyre section height to the tyre section width is 50%.

The carcass 16 in this embodiment comprises two plies of cords arranged radially at an angle of from 75 to 90 degrees with respect to the tyre equator C so that the cords in one ply cross the cords in the other ply. For the carcass cords, organic fibre cords, e.g. nylon, polyester, rayon, aromatic polyamide or the like can be used.

The belt 17 in this embodiment comprises a radially inner ply and a radially outer ply, each ply made of cords laid parallel each other so that the cords in one ply cross the cords in the other ply. For the belt cords, steel cords or organic fibre cords, e.g. nylon, polyester, rayon, aromatic polyamide or the like can be used.

The tread portion 12 is provided within the tread width WT with circumferential grooves 3 and axial grooves 5.

The circumferential grooves 3 extend continuously in the tyre circumferential direction. Each groove has a depth of 0.08 to 0.16 times the tread width WT and a groove width of 0.06 to 0.12 times the tread width WT. The groove width is measured in the widthwise direction of the groove.

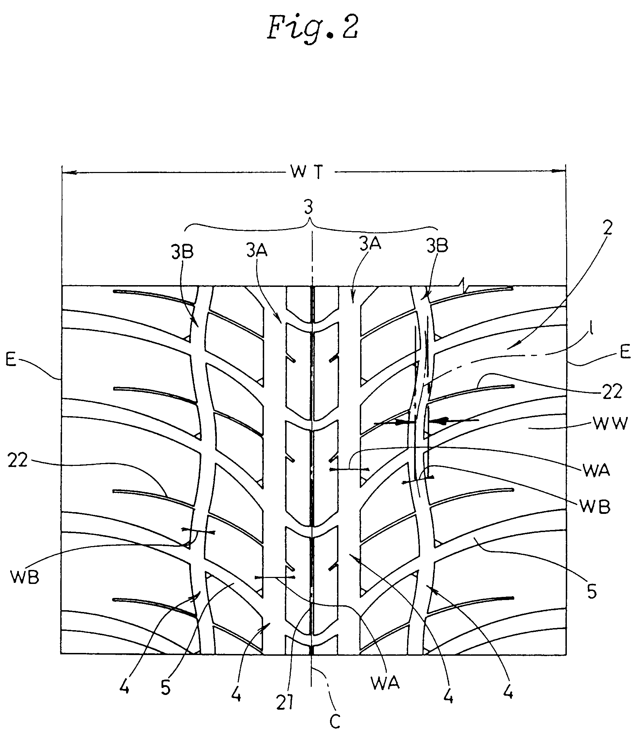

In Fig.2, a pair of axially inner circumferential grooves 3A and a pair of axially outer circumferential grooves 3B are provided.

The axially inner circumferential grooves 3A are straight grooves, but the axially outer circumferential grooves 3B are zigzag or wavy grooves. The axially inner circumferential grooves 3A are disposed one on each side of the tyre equator C. The axially outer circumferential grooves 3B are disposed one between each of the axially inner circumferential grooves 3A and one of the tread edges E.

The paired circumferential grooves 3A, 3B are disposed symmetrically about the tyre equator C with regard to the axial positions.

The groove depths HA and HB of the grooves 3A and 3B, respectively are the same depths in the range of from 0.08 to 0.16 times the tread width WT.

The groove widths WA and WB of the grooves 3A and 3B, respectively are in the range of from 0.06 to 0.12 times the tread width WT, but the groove width WA is larger than the groove width WB. (All considered in the new tyre state).

Here, the tread width WT is between the tread edges E, that is, the maximum ground contacting width between the axial outermost edges E of the ground contacting region when the tyre is mounted on its standard rim and inflated to its standard pressure, and loaded with its standard load. The standard rim is the rim officially approved for the tyre by, for example JATMA (Japan), TRA (USA), ETRTO (Europe) and the like, and the standard inner pressure and the standard load are the maximum air pressure and the maximum tyre load for the tyre officially specified in the Air-pressure/Maximum-load Table of the same associations.

The peak-to-peak amplitude WW of the zigzag circumferential grooves 3B is in the range of from 0.5 to 1.5% time the groove width WB. The result of the waved circumferential grooves 3B is that if a side slip occurs during cornering, it occurs gradually, and therefore, handling controllability is maintained in such an abnormal condition, whereby the cornering stability is effectively improved. This effect can not be obtained, if the amplitude WW is smaller than 0.5 times the groove width WB. If the amplitude WW is larger than 1.5 times the groove width WB, the water drainage of the groove is decreased.

The axial grooves 5 extend continuously from the axially innermost circumferential groove to the tread edge E. Preferably, the depth thereof is in the range of from 0.7 to 1.0 times that of the circumferential grooves 3.

In this embodiment, each of the axial grooves 5 extends continuously from one tread edge E to the other tread edge E, while intersecting all the circumferential grooves. As shown in Fig.2, each axial groove 5 has an opened V-shaped configuration, and all of them are arranged in the same direction. This V-shape configuration is rounded off in the tread centre C rather than bent abruptly so that the portion between the axially inner circumferential grooves 3A has a concave curvature (in Fig.2), and the axially outer groove portion between the axially inner circumferential grooves 3A and the tread edges E has a reverse convex curvature. By such a configuration, water flow resistance from the circumferential grooves 3A and 3B to the axial grooves 5 towards the tread edges E is improved to further the aquaplaning resistance.

In the example shown in Fig.2, the tread pattern is mirror symmetrical about the tyre equator C. However, the tread pattern can be asymmetrical such that the right tread half shifts circumferentially from the left tread half by, for example, a half pitch of the axial grooves 5.

In this embodiment, the axially inner and outer circumferential grooves 3A and 3B are inclining grooves 4. The term inclining groove 4 means a groove having an axially inner groove wall 6 and an axially outer groove wall 7, of which the radially outer edges 6E and 7E respectively are displaced towards the tyre equator C so that the groove walls have an inclination toward the tyre equator.

As shown in Fig.3, the axially inner groove wall 6 intersects the tread face 2, defining the radially outer edge 6E.

The inclination angle (alpha) of the axially inner groove wall 6 with respect to the normal line N1 to the tread face 2 is in the range of from 25 to 45 degrees, preferably 28 to 35 degrees.

Further, the axially outer groove wall 7 intersects the tread face 2, defining the radially outer edge 7E.

The inclination angle (beta) of the axially outer groove wall 7 with respect to the normal line N2 to the tread face 2 is in the range of from 0 to 20 degrees, preferably 5 to 15 degrees.

Further, in this embodiment, a straight circumferential groove 21 of which the width and depth are smaller than those of the circumferential grooves 3 is disposed on the tyre equator C.

Furthermore, axial grooves 22 of which the width and depth are smaller than those of the above-mentioned axial grooves 5 are disposed between the axial grooves 5.

Each axial groove 22 extends from a position between the grooves 3A and 21 to a position between the groove 3B and the tread edge E, intersecting the grooves 3A and 3B.

As mentioned above, all of the circumferential grooves 3 can be an inclining groove 4, but, for example only the paired inner grooves, the paired outer grooves, or one of the inner and outer grooves can be an inclining groove 4.

Test tyres of size 225/50R16 having the same construction and same tread pattern shown in Figs.1 and 2 except for the groove wall inclinations were prepared and tested for the following performances.
1) Coasting noise
   According to the coasting test procedure specified in the Japanese JASO-C602, a 3000cc 4WD passenger car provided with the test tyres was coasted for 50 metres on a straight test course at a casting speed of 35 kilometre/hour, and the maximum sound level in dB(A) of the passing noise was measured with a microphone set at 1.2 meter height and 7.5 meters sideways from the centre line of the test course in the middle of the length thereof.
2) Pattern noise
   Coasting the same test car at a speed of 100 kilometre/hour, the running noise heard inside of the car was evaluated into five ranks. The higher the rank, the smaller the noise.
3) Aquaplaning resistance
   Turning the same test car on a wet road with a water depth of 6 or 7 mm at a speed of 80 kilometre/hour, the turning radius was gradually decreased to increase the lateral acceleration, and the critical lateral acceleration was measured as the lateral aquaplaning resistance. The results are indicated by an index based on that the reference tyre 1 is 100. The larger the index, the better the lateral aquaplaning resistance.

The test results are shown in Table 1.

As shown in Table 1, it was confirmed through the tests that the tyres according to the present invention are superior to the reference tyres in running noise and aquaplaning resistance.

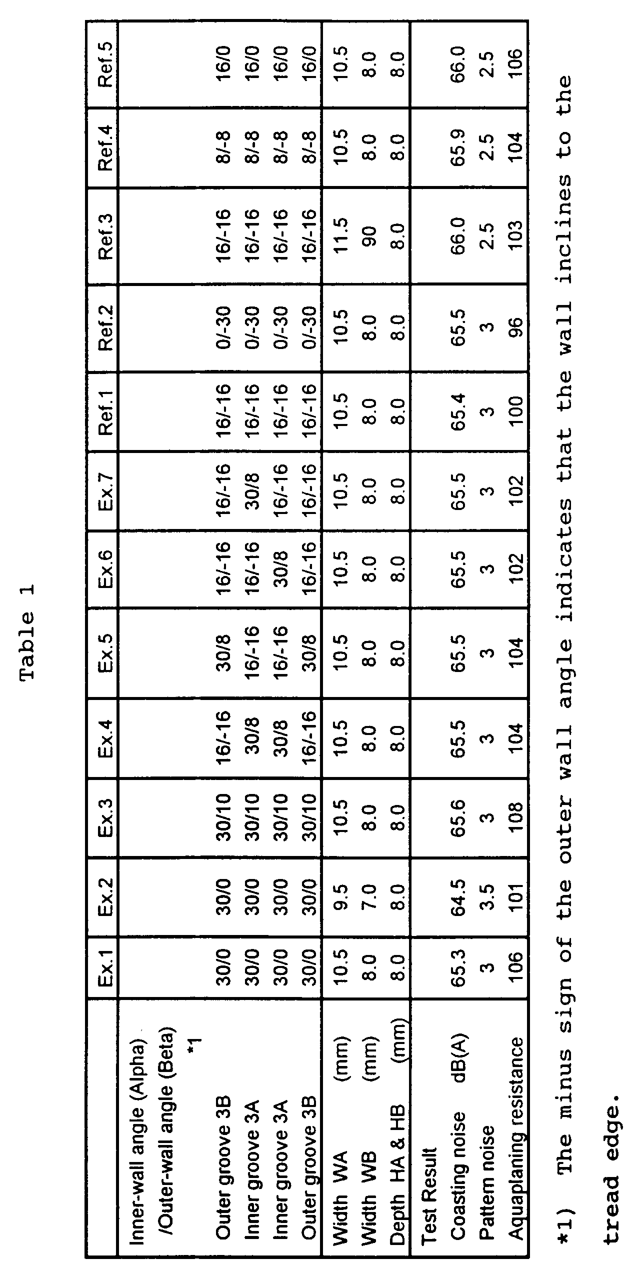

## Claims

1. A pneumatic tyre comprising a tread portion (12) provided with at least one circumferential groove (8) having an axially inner groove wall (6) and an axially outer groove wall (7), the radially outer edges (6E,7E)of the axially inner and outer groove walls (6,7) being disposed towards the tyre equator, and the axially outer groove wall (7) intersecting the tread face (2) at an inclination angle (beta) of from 0 to 20 degrees with respect to the normal line to the tread face, characterised in that the axially inner groove wall (6) intersects the tread face (2) at an inclination angle (alpha) of from 25 to 45 degrees with respect to the normal line to the tread face.

2. A pneumatic tyre according to claim 1, characterised in that said at least one circumferential groove (3) is a straight groove.

3. A pneumatic tyre according to claim 1, characterised in that said at least one circumferential groove (3) is a wavy groove.

4. A pneumatic tyre according to claim 1, 2 or 3, characterised in that one circumferential groove (3) is disposed on each side of the tyre equator.

5. A pneumatic tyre according to claim 1, 2 or 3, characterised in that two circumferential grooves (3A,3B) are disposed on each side of the tyre equator.

6. A pneumatic tyre according to any of claims 1 to 5, characterised in that said tread portion (12) is further provided with a circumferential groove (21) on the tyre equator (C).

7. A pneumatic tyre according to any one of claims 1 to 6, characterised in that said tread portion (12) is provided with no other circumferential groove.

8. A pneumatic tyre according to any of claims 1 to 7, characterised in that said tread portion (12) is further provided with axial grooves (5).

## Patentansprüche

1. Luftreifen mit einem Laufflächenteil (12), der mit zumindest einer Umfangsrille (8) mit einer axial inneren Rillenwand (6) und einer axial äußeren Rillenwand (7) versehen ist, wobei die radial äußeren Kanten (6E, 7E) der axial inneren und äußeren Rillenwände (6, 7) zu dem Reifenäquator hin angeordnet sind und die axial äußere Rillenwand (7) die Oberfläche (2) der Lauffläche unter einem Neigungswinkel (Beta) von 0 bis 20 Grad bezüglich der Senkrechten zu der Oberfläche der Lauffläche schneidet, dadurch gekennzeichnet, daß die axial innere Rillenwand (6) die Oberfläche (2) der Lauffläche unter einem Neigungswinkel (Alpha) von 25 bis 45 Grad bezüglich der Senkrechten zu der Oberfläche der Lauffläche schneidet.

2. Luftreifen nach Anspruch 1, dadurch gekennzeichnet, daß die zumindest eine Umfangsrille (3) eine gerade Rille ist.

3. Luftreifen nach Anspruch 1, dadurch gekennzeichnet, daß die zumindest eine Umfangsrille (3) eine gewellte Rille ist.

4. Luftreifen nach Anspruch 1, 2 oder 3, dadurch gekennzeichnet, daß eine Umfangsrille (3) auf jeder Seite des Reifenäquators angeordnet ist.

5. Luftreifen nach Anspruch 1, 2 oder 3, dadurch gekennzeichnet, daß zwei Umfangsrillen (3A, 3B) auf jeder Seite des Reifenäquators angeordnet sind.

6. Luftreifen nach einem der Ansprüche 1 bis 5, dadurch gekennzeichnet, daß der Laufflächenteil (12) ferner mit einer Umfangsrille (21) auf dem Reifenäquator (C) versehen ist.

7. Luftreifen nach einem der Ansprüche 1 bis 6, dadurch gekennzeichnet, daß der Laufflächenteil (12) mit keiner anderen Umfangsrille versehen ist.

8. Luftreifen nach einem der Ansprüche 1 bis 7, dadurch gekennzeichnet, daß der Laufflächenteil (12) ferner mit axialen Rillen (5) versehen ist.

## Revendications

1. Pneumatique comprenant une partie de bande de roulement (12) ayant au moins une gorge circonférentielle (8) ayant une paroi axialement interne (6) et une paroi axialement externe (7), les bords radialement externes (6E, 7E) des parois axialement interne et externe des gorges (6, 7) étant placés vers l'équateur du pneumatique et la paroi de la gorge axialement externe (7) recoupant la face (2) de la bande de roulement avec un angle d'inclinaison (β) compris entre 0 et 20° par rapport à la normale à la face de la bande de roulement, caractérisé en ce que la paroi de la gorge axialement interne (6) recoupe la face (2) de la bande de roulement avec un angle d'inclinaison (α) compris entre 25 et 45° par rapport à la normale à la face de la bande de roulement.

2. Pneumatique selon la revendication 1, caractérisé en ce que la gorge circonférentielle au moins (3) est une gorge rectiligne.

3. Pneumatique selon la revendication 1, caractérisé en ce que la gorge circonférentielle au moins (3) est une gorge sinueuse.

4. Pneumatique selon la revendication 1, 2 ou 3, caractérisé en ce qu'une gorge circonférentielle (3) est placée de chaque côté de l'équateur du pneumatique.

5. Pneumatique selon la revendication 1, 2 ou 3, caractérisé en ce que deux gorges circonférentielles (3A, 3B) sont placées de chaque côté de l'équateur du pneumatique.

6. Pneumatique selon l'une quelconque des revendications 1 à 5, caractérisé en ce que la partie (12) de bande de roulement possède en outre une gorge circonférentielle (21) placée sur l'équateur (C) du pneumatique.

7. Pneumatique selon l'une quelconque des revendications 1 à 6, caractérisé en ce que la partie (12) de bande de roulement n'a pas d'autres gorges circonférentielles.

8. Pneumatique selon l'une quelconque des revendications 1 à 7, caractérisé en ce que la partie (12) de bande de roulement possède en outre des gorges axiales (5).
